# EUROPEAN PATENT APPLICATION

(11) **EP 1 801 431 A1**
(43) Date of publication of application: **27.06.2007**
(21) Application number: 05767443.4
(22) Date of filing: 29.07.2005
(51) Int. Cl.: F16B 39/10, F16B 41/00, B61C 17/12

(54) **ROTATION PREVENTING DEVICE FOR SCREW COMPONENT, AND RAILROAD VEHICLE AUXILIARY POWER SOURCE DEVICE TO WHICH COMPONENT IS INSTALLED USING THE DEVICE**

(30) Priority: 17.08.2004 JP 2004237318
(71) Applicant: MITSUBISHI DENKI KABUSHIKI KAISHA, Chiyoda-ku, Tokyo 100-8310 (JP)
(72) Inventor: HIROTOMI, Masami MITSUBISHI DENKI KABUSHIKI KAISHA, Chiyoda-ku, Tokyo 1008310 (JP)
(74) Representative: Sajda, Wolf E.
(86) International application number: PCT/JP2005/013971
(87) International publication number: WO 2006/018963

(57) **Abstract**

Conventional bolt-rotation preventing devices are designed to be handled from both bolt and nut sides. Therefore, in locations where the device can be handled from only one side thereof, it has been very difficult to screw a bolt with a nut as well as to prevent the bolt from getting loose.
A screw-rotation preventing device comprises; a main portion (7B) having a through-hole (7A) for passing the shank of a screw (4) having a shank with a male thread on the external surface thereof and a head (4A) with a diameter larger than that of the shank, the through-hole (7A) having a diameter smaller than that of the screw head (4A); an engaging portion (7C) for engaging with a side of an attachment member (2) or a mounting member (3) or a side each of both an attachment member (2) and a mounting member (3); and a head-pressing member (7D) fixed to the main portion (7B) so as to sandwich the screw head (4A) between itself and the main portion (7B) to clamp down the head (4A).

## Description

### Technical Field

The present invention relates to rotation preventing devices that prevent the rotation of screws (such as bolts) whose external surface is provided with a male thread.

### Background Art

An auxiliary power supply apparatus for a railcar, for supplying electricity to lighting fixtures, air conditioners and the like, is mounted on the bottom face outside the railcar body. A transformer and a reactor are attached to a frame of the auxiliary power supply apparatus being suspended therefrom, by means of bolts and nuts with gaskets sandwiched between them, for soundproofing, anti-vibration and the like.
The bolts are inserted from the lower side, so that they can be fixed onto the frame-top with nuts. Once the auxiliary power supply apparatus has been mounted on the railcar body, because of the narrow interspaces between the frame and the railcar body, it is very difficult to fasten/loosen the nuts by passing hands through into the spaces.
Because a gap may possibly grow at the bolt-screwed portion due to deterioration or cracks of the gaskets, causing the bolts to get loose, countermeasures have been taken at the bolt-screwed portion so as to prevent the bolts from getting loose. In most of countermeasures against loosening, preventive devices against loosening, such as double nuts or split pins, have been used on the nut side. The gaskets have also been replaced regularly, before their deterioration over time is found, without any crack on them.
In engaging with bolts and nuts, there have been a rotation preventing device with which a side of the bolt head and a side of the mounting member are engaged in order to prevent the bolt and the nut from rotating together with each other. (refer to Patent Documentation 1 given below, for example)

Patent Documentation 1
Japanese Patent Laid-Open No. 2002-311121

### Disclosure of Invention

Conventionally, a transformer and a reactor are attached to a frame of an auxiliary power supply apparatus being suspended therefrom, by using on the nut side double nuts, split pins or the like as looseness preventing devices, and by inserting the bolts from the frame-bottom. Once the auxiliary power supply apparatus has been mounted on the bottom face outside a railcar body, it is very difficult to handle the nuts from the frame-top.
Therefore, in replacing the gaskets and repairing the transformer or the reactor, it is impossible to remove the transformer or the reactor only. For this reason, the transformer or the reactor has been removed from the auxiliary power supply apparatus only after the auxiliary power supply apparatus is dismounted from the railcar body.
The transformer and the reactor each weigh more than 200 kg, and the auxiliary power supply apparatus weighs more than 1000 kg. For mounting/dismounting the auxiliary power supply apparatus, exclusive-use large facilities have been needed, and the work of mounting/dismounting the auxiliary power supply apparatus has been labor-consuming.
After the bolt has been screwed down with optimum torque, the screw head is not always in an appropriate direction. Therefore, a bolt rotation preventing device described in Patent Documentation 1 may not be used, because the bolt rotation preventing device successfully presses the bolt head side only with the bolt head set in the appropriate direction.
The present invention has been made to solve the problems mentioned above, and an objective of the present invention is to provide a bolt rotation preventing device that can be attached to and/or removed from one side (from below), as well as prevent, from one side(from below), the bolt-loosening.

A screw-rotation preventing device according to the present invention comprises: a main portion having a through-hole for passing therethrough the shank of a screw having a shank with a male thread on the external surface thereof and a head with a diameter larger than that of the shank, the through-hole having a diameter smaller than that of the screw head; an engaging portion for engaging with a side of an attachment member or a mounting member or a side each of both an attachment member and a mounting member; and a head-pressing member fixed to the main portion so as to sandwich the screw head, between itself and the main portion, to clamp down the head.

Because the screw-rotation preventing device according to the present invention comprises: a main portion having a through-hole for passing therethrough the shank of a screw having a shank with a male thread on the external surface thereof and a head with a diameter larger than that of the shank, the through-hole having a diameter smaller than that of the screw head; an engaging portion for engaging with a side of an attachment member or a mounting member or a side each of both an attachment member and a mounting member; and a head-pressing member fixed to the main portion so as to sandwich the screw head, between itself and the main portion, to clamp down the head; the screw-rotation preventing device has effects of being attached to and/or removed from one side and of preventing the screw from rotating.

### Brief Description of Drawings

- Fig. 1A, Fig. 1B and Fig. 1C: are views illustrating a state in which parts have been mounted using a rotation preventing device in Embodiment 1 according to the present invention;
- Fig.2: is a sectional view illustrating a state in which parts have been mounted using a rotation preventing device in Embodiment 1 according to the present invention;
- Fig. 3: is a perspective view of a rotation preventing device in Embodiment 1 according to the present invention, viewed from oblique below before a pressing plate is fixed;
- Fig. 4A, Fig. 4B and Fig. 4C: are views illustrating a state in which parts have been mounted using a rotation preventing device in Embodiment 2 according to the present invention;
- Fig. 5A, Fig. 5B and Fig. 5C: are views illustrating a state in which parts have been mounted using a rotation preventing device in Embodiment 3 according to the present invention

### Reference of Numerals and Symbols

"1" is a railcar body;
"2", a frame(a mounting member);
"2A", a through-hole;
"3", a transformer(an attachment member);
"3A", a through-hole;
"4", a bolt (a screw);
"4A", a head;
"5", a nut;
"5A", a through-hole;
"6A", a gasket;
"6B", a gasket;
"7", a rotation preventing device;
"7A", a through-hole;
"7B", a main portion;
"7C", a stopping portion(an engaging portion);
"7D", a pressing plate(a head-pressing member);
"7E", a boss(a protrusion);
"7F", a screw hole;
"8", a washer;
"9", a spring washer;
"10", a fixing screw.

### Best Mode for Carrying Out the Invention

### Embodiment 1

In this description, a screw-rotation preventing device according to the present invention is explained below in a case where a transformer is attached to an auxiliary power supply apparatus by using the screw-rotation preventing device. The transformer is attached, at its four corners, to the auxiliary power supply apparatus.

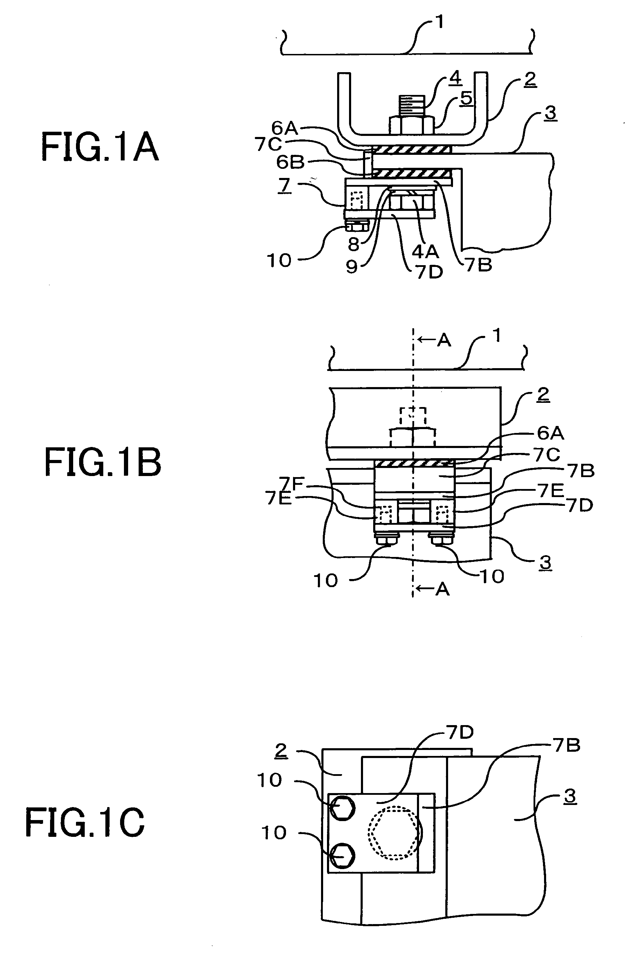

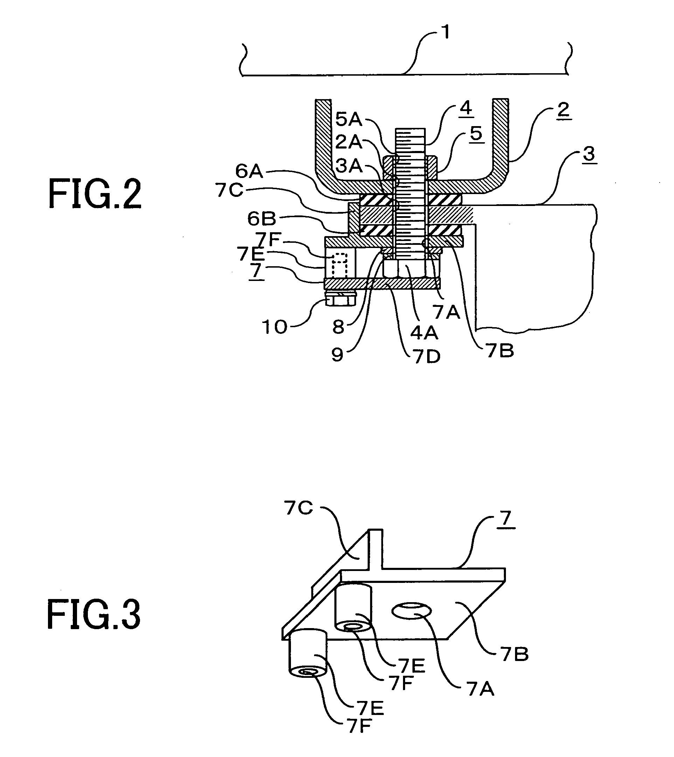

Fig. 1A, Fig. 1B and Fig. 1C are views illustrating a state in which parts have been mounted, at a corner, with a rotation preventing device in Embodiment 1. Fig. 1A is a front view, Fig. 1B is a side view and Fig. 1C is a plain view viewed from below. And Fig. 2 is a sectional view viewed along the line A-A in Fig. 1B.
The auxiliary power supply apparatus is mounted on the bottom face outside a railcar body 1, and fixing metals of the transformer 3 are fixed onto a frame 2 of the auxiliary power supply apparatus. Fig. 1A, Fig. 1B, Fig. 1C and Fig. 2 illustrate only the frame 2 of the auxiliary power supply apparatus. The frame 2 corresponds to a mounting member, and the transformer corresponds to an attachment member.

The frame 2 is provided with through-holes 2A in order to pass a bolt 4 through each hole, and each fixing metal of the transformer 3 is also provided with a through-hole 3A in order to pass the bolt 4 through the hole. A nut 5 is also provided with a through-hole 5A on which a female thread is provided, which engages with a male thread on the external surface of the shank of the bolt 4. As illustrated in Fig. 2, these through-holes are disposed co-axially with each other. The nut 5 is in advance fixed on the frame-top of the frame 2 by welding. The bolt 4 is a screw having a shank whose external surface is provided with a male thread. The diameter of the bolt-4 head 4A is larger than that of the shank.
The fixing metal of the transformer 3 is placed under the frame 2, sandwiching a gasket 6A between itself and the frame. A gasket 6B, a rotation preventing device 7, a washer 8 and a spring washer 9 are placed in this order from the bottom side of the fixing metal of the transformer 3; the bolt 4 is inserted, from the bottom side of the fixing metal of the transformer 3, into the through-hole 5A of the nut 5, sandwiching them between the fixing metal and the screw head. Commercially available standard parts can be used except the rotation preventing device 7.

The rotation preventing device 7 comprises: a main portion 7B having a through-hole 7A through which the bolt 4 is passed; a stopping portion 7C, working as an engaging portion, for preventing rotation by engaging with a side of the fixing metal of the transformer 3; a pressing plate 7D, working as a head-pressing member; and two bosses 7E, being two protrusions, for fixing the pressing plate 7D.
The stopping portion 7C and the bosses 7E are fixed to the main portion 7B by welding. The stopping portion 7C may also be formed by pressing or the like. Each boss 7E is provided with a screw hole 7F. After the bolt 4 has been screwed, the pressing plate 7D is fixed at the positions of the screw holes 7F of the bosses 7E with fixing screws 10.
Fig. 3 is a perspective view illustrating the rotation preventing device 7 viewed from oblique below before the pressing plate 7D is fixed.

The diameter of the through-hole 7A in the main portion 7B is made to be smaller than that of the bolt-4 head 4A, and sufficiently large to pass the shank of the bolt 4 therethrough. The boss 7E is made appropriately tall so that the bolt-4 head 4A can be securely sandwiched between the pressing plate 7D and the main portion 7B.
More specifically, because the pressing plate 7D is planate, the height of the boss 7E is made slightly lower than that of the bolt-4 head 4A. When height differs between the portion where the pressing plate 7D contacts with the bolt-4 head 4A and the portion where the pressing plate 7D is fixed to the boss 7E, the height of boss 7E must be decided in consideration of this height difference.
The rotation preventing device 7 is made of a material, having a thickness and a shape that give necessary and sufficient strength. When the size of the bolt 4 is chosen as big as M16, the main portion 7A and the stopping portion 7C are made of steel plates of a thickness over some 3 mm and the pressing plate 7D is made of steel plate of a thickness over some 5 mm. And the fixing screw 10 is made as big as M10.

The operations of this device are described below. The auxiliary power supply apparatus is mounted in advance on the bottom face outside the railcar body 1. The fixing metals of the transformer 3 are attached in four portions of the frame 2 of the auxiliary power supply apparatus. Attaching operations in each position are performed as follows. The shank of the bolt 4 is passed through the spring washer 9, the washer 8, the main portion 7B of the rotation preventing device 7 and the gasket 6B from below in this order.
In addition, the shank of the bolt 4 is passed through the through-hole 3A of the fixing metal of the transformer 3, the gasket 6A and the through-hole 2A of the frame 2, and then the tip of the bolt 4 is inserted into the through-hole 5A of the nut 5. The stopping portion 7C of the rotation preventing device 7 is set so that it does not move by contacting with the side of the fixing metal of the transformer 3. The bolt 4 is screwed into the through-hole 5A of the nut 5 by rotating the bolt-4 head 4A using a wrench.
After the bolt 4 has been screwed with necessary torque, the pressing plate 7D is fixed, by screwing the fixing screws 10 at the screw holes 7F of the two bosses 7E so that the bolt 4 head 4A is sandwiched with a required sufficient force, between the pressing plate 7D and the main portion 7B, in order to prevent the head from rotating. In this way, the operations of attaching the fixing metals of the transformer 3 to the frame 2 can be performed only from one side (from below).

Also when removing the transformer 3, the transformer can be removed by operations only from one side of the frame 2 (from below) as follows. First, the fixing screws 10 are loosened and removed, then the pressing plate 7D is removed. And then, the bolt 4 is loosened by rotating by a wrench, so as to be removed.

Even when torque to rotate the bolt 4 works thereupon, the bolt 4 does not rotate to get loose, because the bolt 4 and the rotation preventing device 7 remain un-rotated, thanks to the rotation preventing device 7. More specifically explaining, when torque to rotate the bolt 4 works thereupon, the rotation preventing device 7 also is forced to rotate because the head of the bolt 4 is sandwiched between the pressing plate 7D and the main portion 7B.
However, the rotation preventing device 7 does not rotate because the stopping portion 7C of the device contacts with the side of the fixing metal of the transformer 3. As a result, the bolt 4 does not rotate to get loose. Even when the fixing metal of the transformer 3 gets movable between the frame 2 and the rotation preventing device 7 due to deterioration of the gasket 6A or the gasket 6B, the bolt 4 does not rotate to get loose.

When the rotation preventing devices 7 described above are used for attaching parts to a railcar auxiliary power supply apparatus, it is possible to attach/remove the parts to/from the auxiliary power supply apparatus without dismounting the apparatus from the railcar body, and is also possible to prevent the bolts from rotating. This means that parts can be easily attached to and/or removed from the auxiliary power supply apparatus.
Conventionally, parts cannot be easily attached to and/or removed from the auxiliary power supply apparatus without removing the auxiliary power supply apparatus from the railcar body. Exclusive-use large facilities have been needed to dismount the auxiliary power supply apparatus, and therefore, only in the rail yards that are equipped with those large facilities, it has been possible to dismount the auxiliary power supply apparatus.
When the screw-rotation preventing devices according to the present invention are used in order to attach parts to the railcar auxiliary power supply apparatus, in situ repairing or the like becomes possible wherever the railcar stops due to a failure or the like, because parts can be easily attached/removed anywhere.

Because the bosses 7E for fixing two screws 10 are placed at an edge of the main portion 7B, there is an effect in that the bosses 7E do not hamper screwing/loosening the bolts 4. In Embodiment 1, the rotation preventing device 7 is applied to a portion where the nut 5, being fixed to the mounting member, and the bolt 4 are screwed therewith, a screw part, instead of the bolt 4, having on its head a groove or a hole to rotate the screw by a screw driver or the like may also be used.
Furthermore, a threaded hole that is provided in the mounting member may be used instead of the nut 5. The stopping portion 7C of the rotation preventing device 7 is engaged with the side of the fixing metal of the transformer 3, as the fixing member, the stopping portion may be engaged with the side of the mounting member in such cases as the stopping portion cannot be engaged, with sufficient strength, with a thin attachment member. Furthermore, the stopping portion 7C may be engaged with both sides of the attachment member and the mounting member.

Although it has been explained in Embodiment 1 according to the present invention that the bolt 4, directing upwardly, is screwed from below, the rotation preventing device 7 according to the present invention may be applied to cases where the bolt 4 is directed any directions including the upward direction and lateral directions.
Obviously, the device may also be applied to cases where the attachment member is not a transformer, as well as the mounting member is not the frame 2 of the auxiliary power supply apparatus. The rotation preventing device 7 may be positioned anywhere wherever the engaging portion of the device can engage with a side of either an attachment member or a mounting member and a through-hole can be provided in the attachment member.
Although the pressing plate 7D has been fixed to the bosses 7E in Embodiment 1 according to the present invention, the bosses 7E may not always be provided. When the bosses 7E are not provided, screw holes of enough depth are provided in the main portion 7B, and a space for accommodating the bolt-4 head 4A is provided between the pressing plate 7D and the main portion 7B, by processing, such as bending, the pressing plate 7D. The processing of the pressing plate 7D in order to create the space, may be performed by cutting, welding, casting, or the like.

When the two fixing screws 10 are positioned such that the line connecting them crosses over the head of the bolt 4, the bolt 4 head 4A can securely be sandwiched between the main portion 7B and the pressing plate 7D, even if the stiffness of the pressing plate 7D is low. The pressing plate 7D may be formed in any shape as long as the bolt 4 head 4A can be held down, and the plate may not be set in parallel with the edge portion of the attachment member.
Because the rotation preventing device 7 is provided, the spring washer 9 for preventing loosening may not be needed. Also, the washer 8 may not be needed unless the bolt-4 head 4A is likely to dent into the attachment member portion with which the bolt 4 contacts. The above is also applicable to other aspects of embodiments.

### Embodiment 2

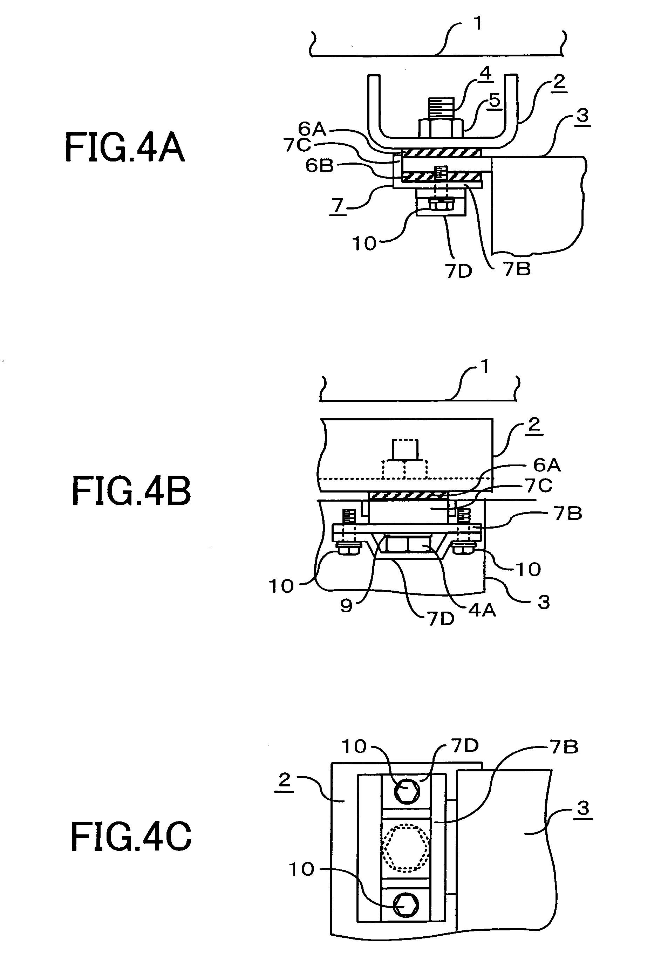

In Embodiment 2 according to the present invention, bosses 7E are eliminated from the rotation preventing device 7, but two fixing screws 10 for fixing the pressing plate 7D are positioned such that the line connecting the screws 10 crosses over the bolt-4 head 4A. Fig. 4A, Fig. 4B and Fig. 4C are views illustrating a state in which parts have been mounted using a rotation preventing device in Embodiment 2. Fig. 4A is a front view, Fig. 4B is a side view and Fig. 4C is a plain view viewed from below.
Embodiment 2 differs from Embodiment 1 in the following points; the shape of the rotation preventing device 7, the shape of fixing metal of the transformer 3, and fixing without using spring washer 9. The rotation preventing device 7 is not provided with bosses 7E, but is provided with two screw holes 7F in the main portion 7B. The through-hole 7A where the bolt 4 is passed through and two screw holes 7F lie collinearly. The stopping portion 7C is formed by pressing.
The pressing plate 7D is bent at its four locations so that the pressing portion for pressing down the bolt 4 head 4A is parallel to the contacting portions contacting to the main portion 7B, and forms, together with the main portion, a trapezoid-shaped space. The bolt 4 head 4A is accommodated in this trapezoidal space, so that the pressing plate 7D is press-fixed in order to prevent the head from rotating. The pressing plate 7D is also formed by pressing.

Because the fixing metals, each having through-hole 3A, are provided at only the four corners of the transformer 3 main unit, the fixing screw 10 does not contact with the fixing metals even if the tip of the fixing screw projects from the top side of the main portion 7B.
The way of attaching, using this rotation preventing device 7, is almost the same as that in Embodiment 1. The bolt 4 is passed through the washer 8, the main portion 7B of the rotation preventing device 7, and the gasket 6B from below in this order. All the procedures following the above operations are the same as those in Embodiment 1.

In this Embodiment 2, the fixing metals of the transformer 3 can be attached to the frame 2 by an operation only from one side (from below). Thanks to the rotation preventing device 7 being provided, even when torque to rotate the bolt 4 works thereupon, the bolt 4 does not rotate to get loose, because the bolt 4 and the rotation preventing device 7 remain un-rotated.
Because the rotation preventing device 7 in Embodiment 2 is not provided with bosses 7E, the device can be easily formed by only pressing without welding, resulting in manufacturing labor hours being less than that in Embodiment 1.

Because the line connecting the two fixing screws 10 with each other crosses over the bolt 4 head 4A, the stiffness of the pressing plate 7D may be less than that in Embodiment 1, and a plate thinner than that in Embodiment 1 can be used as the pressing plate 7D, resulting in cost-reduction.
Here, the positions of the fixing screws 10 are defined as the fixing positions, and the outermost area enclosed by the shank's contours of the fixing screws 10 and lines connecting those of two fixing screws 10, is defined as the area enclosed by the fixing positions.
When the number of fixing positions is no less than three, the outermost area enclosed by the shank's contours of the fixing screws 10 and lines connecting the shank's contours of the screws, is defined as the area enclosed by the fixing positions. When even part of the screw 4 head 4A lies within the area enclosed by the fixing positions, it brings an effect of allowing to use a pressing plate 4D thinner than that in a case where part of the screw 4 head 4A does not lie within that area.

### Embodiment 3

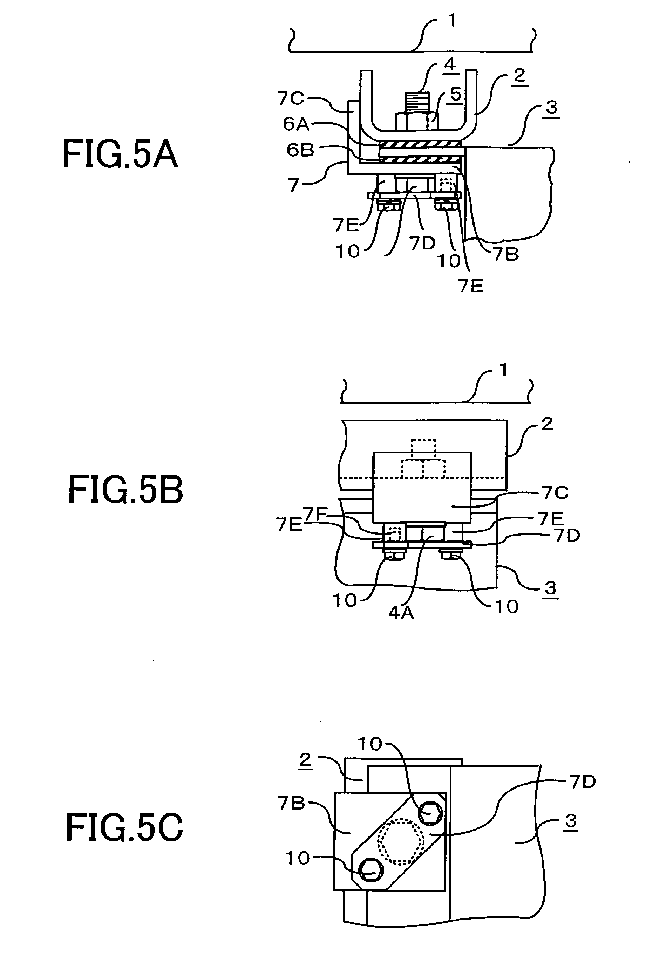

In Embodiment 3, a stopping portion 7C of a rotation preventing device 7 engages with the frame 2 that is a mounting member. Fig. 5A, Fig. 5B and Fig. 5C are views illustrating a state in which parts have been mounted, using a rotation preventing device in Embodiment 3. Fig. 5A is a front view, Fig. 5B is a side view and Fig. 5C is a plain view viewed from below.
Embodiment 3 differs from Embodiment 1 in the following points: engaging the stopping portion 7C of rotation preventing device 7 with the mounting member, the shape of the rotation preventing device 7, and using no spring washer 9. Two bosses 7E of the rotation preventing device 7 are placed such that the line connecting the two bosses forms an angle of some 45 degrees with respect to the side of the fixing metal of the transformer 3, and the through-hole 7A, where the bolt 4 is passed through, lies on the line. The stopping portion 7C is formed by pressing. The bosses 7E are welded onto the main portion 7B. A pressing plate 7D is formed into approximate rectangular of a width being narrower than that in Embodiment 1 and its thickness being slightly thinner than the same.
The attaching way in using the rotation preventing device 7 is almost the same as that in Embodiment 2. However, the stopping portion 7C is engaged with the side of the frame 2.

In this Embodiment 3, the operations of attaching/removing the fixing metal of the transformer 3 can be performed only from one side of the frame 2 (from below). Thanks to the rotation preventing device 7, even when torque to rotate the bolt 4 works thereupon, the bolt 4 does not rotate to get loose, because the bolt 4 and the rotation preventing device 7 remain un-rotated.

## Claims

1. A screw-rotation preventing device, comprising:
a main portion having a through-hole for passing the shank of a screw having a shank with a male thread on the external surface thereof and a head with a diameter larger than that of the shank, the through-hole having a diameter smaller than that of the screw head;
an engaging portion for engaging with a side of an attachment member or a mounting member or a side each of both an attachment member and a mounting member; and
a head-pressing member fixed to the main portion so as to sandwich the screw head between itself and the main portion to clamp down the head.

2. A screw-rotation preventing device according to claim 1, wherein the main portion is provided with a protrusion to which the head-pressing member is fixed.

3. A screw-rotation preventing device according to claim 2, wherein the height of the protrusion is lower than that of the screw head, and the head-pressing member is planate.

4. A screw-rotation preventing device according to claim 1, wherein the head-pressing plate is folded to create a space between the head-pressing plate and the main portion, to accommodate the screw head.

5. A screw-rotation preventing device according to claim 1, wherein the head-pressing plate is fixed onto the main portion in a plurality of fixing positions and the screw head lies within an area enclosed by the fixing positions

6. A railcar auxiliary power supply apparatus, wherein a part is attached thereto by using a screw-rotation preventing device according to any one of claims 1 to 5.
